# EUROPEAN PATENT APPLICATION

(11) **EP 4 492 316 A1**
(43) Date of publication of application: **15.01.2025**
(21) Application number: 23807219.3
(22) Date of filing: 12.01.2023
(51) Int. Cl.: G06Q 30/0283, G06Q 10/0635

(54) **INFORMATION PROCESSING DEVICE, INFORMATION PROCESSING SYSTEM, NON-TRANSITORY COMPUTER-READABLE RECORDING MEDIUM, AND INFORMATION PROCESSING METHOD**

(30) Priority: 18.05.2022 JP 2022081868
(71) Applicant: BRIDGESTONE CORPORATION, Chuo-ku Tokyo 104-8340 (JP)
(72) Inventor: SANNOMIYA Takenori, Tokyo 104-8340 (JP)
(74) Representative: Marks & Clerk LLP
(86) International application number: PCT/JP2023/000678
(87) International publication number: WO 2023/223601

(57) **Abstract**

An information processing apparatus (10) includes a controller (13). The controller (13) is configured to acquire risk information based on a foreign object that could cause damage to an aircraft, and enable provision of the acquired risk information as a common indicator for determining fee information related to operation of the aircraft.

## Description

### TECHNICAL FIELD

The present disclosure relates to an information processing apparatus, an information processing system, a non-transitory computer readable medium, and an information processing method.

### BACKGROUND

Technology related to foreign objects on road surfaces, such as airport runways, is known. For example, Patent Literature (PTL) 1 discloses a monitoring management system that uses measurement data from a plurality of radar apparatuses to determine whether a foreign object is present on a road surface. Such a monitoring management system appropriately supports the monitoring operations of an operator in charge of monitoring a specific monitoring area.

### CITATION LIST

### Patent Literature

PTL 1: JP 2015-194371 A

### SUMMARY

### (Technical Problem)

In conventional technology, sufficient consideration has not been made for how risk information based on foreign objects that could cause damage to an aircraft can contribute to optimization of various business operations related to the operation of aircraft, for example by using the risk information to determine fee information related to the operation of aircraft.

The present disclosure provides technology that enables risk information based on foreign objects that could cause damage to an aircraft to be used for optimizing business operations related to the operation of aircraft.

### (Solution to Problem)

An information processing apparatus according to an embodiment of the present disclosure is
(1) an information processing apparatus including a controller, wherein
   the controller is configured to
   acquire risk information based on a foreign object that could cause damage to an aircraft, and
   enable provision of the acquired risk information as a common indicator for determining fee information related to operation of the aircraft.
(2) In the information processing apparatus according to (1), the controller may be configured to acquire the risk information based on damage to each tire attached to the aircraft for each location at which the tire may have been damaged.
(3) In the information processing apparatus according to (1) or (2), the controller may be configured to generate first notification information upon determining that the acquired risk information has reached a first threshold and provide the first notification information to a user referring to the risk information.
(4) In the information processing apparatus according to any one of (1) to (3), the controller may be configured to calculate a base amount of the fee information based on the risk information.
(5) In the information processing apparatus according to (4),
   the fee information may include an airport fee paid by an airline that operates the aircraft, and
   the controller may be configured to calculate the base amount of the airport fee to be lower as the risk information is higher.
(6) In the information processing apparatus according to (4) or (5),
   the fee information may include an insurance premium paid to an insurance company by an airline, as an insured party, that operates the aircraft, and
   the controller may be configured to calculate the base amount of the insurance premium to be higher as the risk information is higher.
(7) In the information processing apparatus according to any one of (4) to (6), the controller may be configured to generate second notification information upon determining that the calculated base amount has reached a second threshold and provide the second notification information to a user referring to the risk information.

An information processing system according to an embodiment of the present disclosure is
(8) an information processing system including:
   the information processing apparatus according to any one of (1) to (7);
   a first information processing terminal to be used by an airline that operates the aircraft;
   a second information processing terminal to be used by a management company of an airport used in operation of the aircraft; and
   a third information processing terminal to be used by an insurance company with which the airline contracts as an insured party.
(9) In the information processing system according to (8), the first information processing terminal may be configured to optimize an operation plan of the aircraft based on the risk information.
(10) In the information processing system according to (8) or (9), the second information processing terminal may be configured to calculate, based on the risk information, an airport fee to be received by the management company from the airline.
(11) In the information processing system according to any one of (8) to (10), the third information processing terminal may be configured to calculate, based on the risk information, an insurance premium to be received by the insurance company from the airline that is the insured party.

A program according to an embodiment of the present disclosure is (12) a program configured to cause an information processing apparatus to execute operations including:
acquiring risk information based on a foreign object that could cause damage to an aircraft; and
enabling provision of the acquired risk information as a common indicator for determining fee information related to operation of the aircraft.

An information processing method according to an embodiment of the present disclosure is
(13) an information processing method to be executed on an information processing apparatus, the information processing method including:
acquiring risk information based on a foreign object that could cause damage to an aircraft; and
enabling provision of the acquired risk information as a common indicator for determining fee information related to operation of the aircraft.

### (Advantageous Effect)

The information processing apparatus, information processing system, non-transitory computer readable medium, and information processing method according to an embodiment of the present disclosure enable risk information based on foreign objects that could cause damage to an aircraft to be used for optimizing business operations related to the operation of aircraft.

### BRIEF DESCRIPTION OF THE DRAWINGS

In the accompanying drawings:
FIG. 1 is a diagram illustrating a configuration of an information processing system that includes an information processing apparatus according to an embodiment of the present disclosure;
FIG. 2 is a functional block diagram schematically illustrating configurations of the information processing apparatus, the first information processing terminal, the second information processing terminal, and the third information processing terminal in FIG. 1;
FIG. 3 is a sequence diagram illustrating an example of an information processing method executed by the information processing system in FIG. 1;
FIG. 4 is a flowchart for explaining a first example of an information processing method executed by the information processing apparatus in FIG. 1;
FIG. 5 is a flowchart for explaining a second example of an information processing method executed by the information processing apparatus in FIG. 1;
FIG. 6 is a diagram illustrating a first example of information stored in the memory of the information processing apparatus in FIG. 1; and
FIG. 7 is a diagram illustrating a second example of information stored in the memory of the information processing apparatus in FIG. 1.

### DETAILED DESCRIPTION

An embodiment of the present disclosure is now described with reference to the drawings.

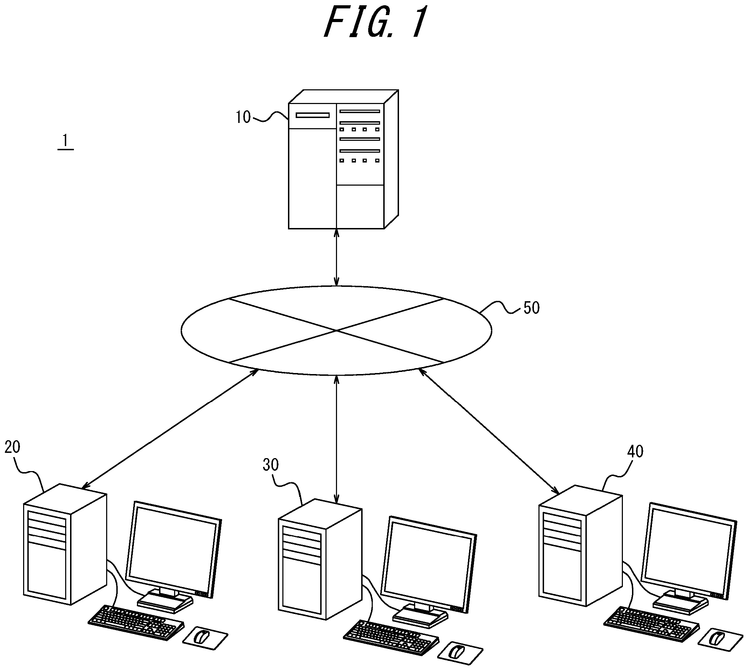

FIG. 1 is a diagram illustrating the configuration of an information processing system 1 that includes an information processing apparatus 10 according to an embodiment of the present disclosure. An overview of the information processing system 1 including the information processing apparatus 10 according to an embodiment of the present disclosure is mainly described with reference to FIG. 1. In addition to the information processing apparatus 10, the information processing system 1 includes a first information processing terminal 20, a second information processing terminal 30, and a third information processing terminal 40. Hereinafter, the first information processing terminal 20, second information processing terminal 30, and third information processing terminal 40 are collectively referred to simply as the information processing terminal as appropriate.

To simplify the explanation, FIG. 1 illustrates only one information processing apparatus 10, but the number of information processing apparatuses 10 in the information processing system 1 may be two or more. Similarly, although only one first information processing terminal 20 is illustrated in FIG. 1, the number of first information processing terminals 20 in the information processing system 1 may be two or more. Although only one second information processing terminal 30 is illustrated in FIG. 1, the number of second information processing terminals 30 in the information processing system 1 may be two or more. Although only one third information processing terminal 40 is illustrated in FIG. 1, the number of third information processing terminals 40 in the information processing system 1 may be two or more.

Each of the information processing apparatus 10, the first information processing terminal 20, the second information processing terminal 30, and the third information processing terminal 40 is communicably connected to a network 50 that includes a mobile communication network, the Internet, and the like. In other words, one of the information processing apparatus 10, the first information processing terminal 20, the second information processing terminal 30, and the third information processing terminal 40 is communicably connected to the other apparatuses via the network 50.

The information processing apparatus 10 is one server apparatus or a plurality of communicably connected server apparatuses. The information processing apparatus 10 is not limited to these examples and may be any general-purpose electronic device, such as a personal computer (PC) or smartphone, or another electronic device dedicated to the information processing system 1.

The first information processing terminal 20 is a general-purpose electronic device such as a PC, tablet PC, or smartphone. The first information processing terminal 20 is an electronic device used by an airline that operates aircraft. The first information processing terminal 20 is an electronic device operated by a person in charge as a user at the airline. The first information processing terminal 20 may be one or a plurality of communicably connected server apparatuses used by the airline, or may be another electronic device dedicated to the information processing system 1, but is not limited to these examples.

The second information processing terminal 30 is a general-purpose electronic device such as a PC, tablet PC, or smartphone. The second information processing terminal 30 is an electronic device used by a management company of an airport used in operation of the aircraft of the aforementioned airline. The second information processing terminal 30 is an electronic device operated by a person in charge as a user at the management company. The second information processing terminal 30 may be one or a plurality of communicably connected server apparatuses used by the management company, or may be another electronic device dedicated to the information processing system 1, but is not limited to these examples.

The third information processing terminal 40 is a general-purpose electronic device such as a PC, tablet PC, or smartphone. The third information processing terminal 40 is an electronic device used by an insurance company with which the aforementioned airline contracts as an insured party. The third information processing terminal 40 is an electronic device operated by a person in charge as a user at the insurance company. The third information processing terminal 40 may be one or a plurality of communicably connected server apparatuses used by the insurance company, or may be another electronic device dedicated to the information processing system 1, but is not limited to these examples.

As an overview of one embodiment, the information processing apparatus 10 acquires risk information based on a foreign object that could cause damage to the aircraft. The information processing apparatus 10 acquires the risk information based on damage to each tire attached to the aircraft for each location at which the tire may have been damaged. In the present disclosure, the "foreign object" includes any fallen objects in the path of movement of an aircraft in an airport, including road surfaces such as runways. Fallen objects include, for example, parts such as screws used in aircraft and portions of cargo carried on the aircraft. The "risk information" includes, for example, the incidence of foreign object damage (FOD).

The information processing apparatus 10 enables provision of the acquired risk information as a common indicator for determining fee information related to operation of the aircraft. In the present disclosure, the "fee information" includes, for example, an airport fee paid by the airline that operates the aircraft, an insurance premium paid to an insurance company by the airline, as an insured party, that operates the aircraft, and the like. The airport fee includes, for example, a landing fee, parking fee, security fee, and the like.

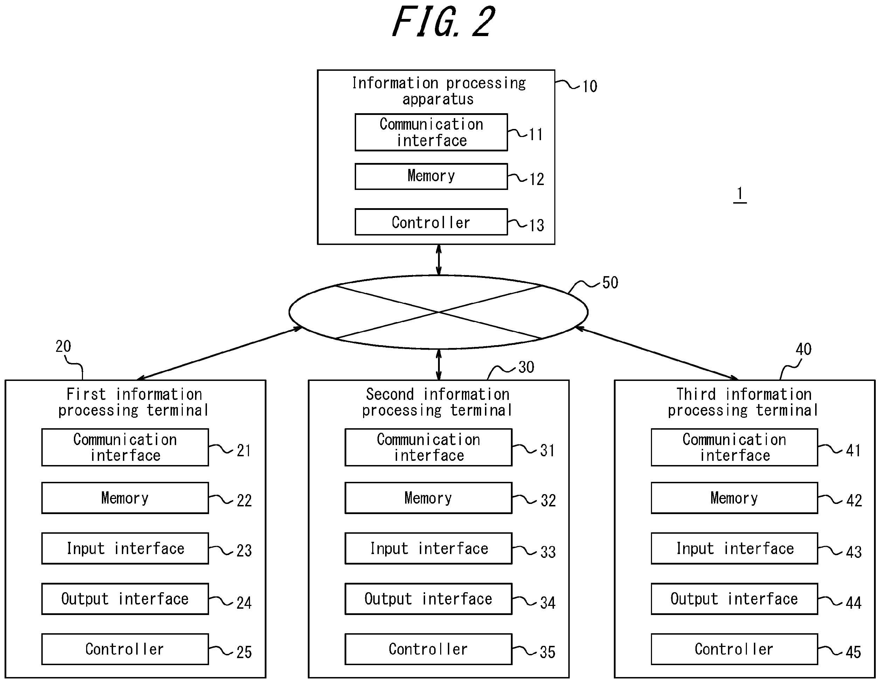

FIG. 2 is a functional block diagram schematically illustrating configurations of the information processing apparatus 10, the first information processing terminal 20, the second information processing terminal 30, and the third information processing terminal 40 in FIG. 1. With reference to FIG. 2, examples of the configurations of the information processing apparatus 10, the first information processing terminal 20, the second information processing terminal 30, and the third information processing terminal 40 included in the information processing system 1 are mainly described.

The information processing apparatus 10 includes a communication interface 11, a memory 12, and a controller 13.

The communication interface 11 includes a communication module that connects to the network 50. For example, the communication interface 11 includes a communication module compatible with mobile communication standards such as 4^{th} Generation (4G) and 5^{th} Generation (5G) or Internet standards. In an embodiment, the information processing apparatus 10 is connected to the network 50 via the communication interface 11. The communication interface 11 transmits and receives various information via the network 50.

The memory 12 is, for example, a semiconductor memory, a magnetic memory, an optical memory, or the like, but is not limited to these. The memory 12 functions as a main memory, an auxiliary memory, or a cache memory. The memory 12 stores any information used for operations of the information processing apparatus 10. The memory 12 stores system programs, application programs, and various information received or transmitted by the communication interface 11. The information stored in the memory 12 can be updated with information received from the network 50 via the communication interface 11.

The controller 13 includes one or more processors. In the present disclosure, the "processor" is, for example, a general-purpose processor or a dedicated processor specialized for particular processing, but these examples are not limiting. The controller 13 is communicably connected with each component of the information processing apparatus 10 and controls operations of the information processing apparatus 10 overall.

The configuration of the first information processing terminal 20 included in the information processing system 1 will be mainly described. The first information processing terminal 20 includes a communication interface 21, a memory 22, an input interface 23, an output interface 24, and a controller 25.

The communication interface 21 includes a communication module that connects to the network 50. For example, the communication interface 21 includes a communication module compliant with a mobile communication standard, such as 4G or 5G, or Internet standards. In an embodiment, the first information processing terminal 20 is connected to the network 50 via the communication interface 21. The communication interface 21 transmits and receives various information via the network 50.

The memory 22 is, for example, a semiconductor memory, a magnetic memory, an optical memory, or the like, but is not limited to these. The memory 22 functions as a main memory, an auxiliary memory, or a cache memory. The memory 22 stores any information used for operations of the first information processing terminal 20. The memory 22 stores system programs, application programs, and various information received or transmitted by the communication interface 21. The information stored in the memory 22 can be updated with information received from the network 50 via the communication interface 21.

The input interface 23 includes one or more interfaces for input to detect user input and acquire input information based on user operations. For example, the input interface 23 may be a physical key, a capacitive key, a touchscreen provided integrally with a display of the output interface 24, a microphone that receives audio input, or the like.

The output interface 24 includes one or more interfaces for output to output information and notify the user. For example, the output interface 24 includes a display that outputs information as images, a speaker that outputs information as audio, or the like.

The controller 25 includes one or more processors. The controller 25 is communicably connected with each component of the first information processing terminal 20 and controls overall operations of the first information processing terminal 20.

The configuration of the second information processing terminal 30 included in the information processing system 1 will be mainly described. The second information processing terminal 30 includes a communication interface 31, a memory 32, an input interface 33, an output interface 34, and a controller 35.

The communication interface 31 includes a communication module that connects to the network 50. For example, the communication interface 31 includes a communication module compliant with a mobile communication standard, such as 4G or 5G, or Internet standards. In an embodiment, the second information processing terminal 30 is connected to the network 50 via the communication interface 31. The communication interface 31 transmits and receives various information via the network 50.

The memory 32 is, for example, a semiconductor memory, a magnetic memory, an optical memory, or the like, but is not limited to these. The memory 32 functions as a main memory, an auxiliary memory, or a cache memory. The memory 32 stores any information used for operations of the second information processing terminal 30. The memory 32 stores system programs, application programs, and various information received or transmitted by the communication interface 31. The information stored in the memory 32 can be updated with information received from the network 50 via the communication interface 31.

The input interface 33 includes one or more interfaces for input to detect user input and acquire input information based on user operations. For example, the input interface 33 may be a physical key, a capacitive key, a touchscreen provided integrally with a display of the output interface 34, a microphone that receives audio input, or the like.

The output interface 34 includes one or more interfaces for output to output information and notify the user. For example, the output interface 34 includes a display that outputs information as images, a speaker that outputs information as audio, or the like.

The controller 35 includes one or more processors. The controller 35 is communicably connected with each component of the second information processing terminal 30 and controls overall operations of the second information processing terminal 30.

The configuration of the third information processing terminal 40 included in the information processing system 1 will be mainly described. The third information processing terminal 40 includes a communication interface 41, a memory 42, an input interface 43, an output interface 44, and a controller 45.

The communication interface 41 includes a communication module that connects to the network 50. For example, the communication interface 41 includes a communication module compliant with a mobile communication standard, such as 4G or 5G, or Internet standards. In an embodiment, the third information processing terminal 40 is connected to the network 50 via the communication interface 41. The communication interface 41 transmits and receives various information via the network 50.

The memory 42 is, for example, a semiconductor memory, a magnetic memory, an optical memory, or the like, but is not limited to these. The memory 42 functions as a main memory, an auxiliary memory, or a cache memory. The memory 42 stores any information used for operations of the third information processing terminal 40. The memory 42 stores system programs, application programs, and various information received or transmitted by the communication interface 41. The information stored in the memory 42 can be updated with information received from the network 50 via the communication interface 41.

The input interface 43 includes one or more interfaces for input to detect user input and acquire input information based on user operations. For example, the input interface 43 may be a physical key, a capacitive key, a touchscreen provided integrally with a display of the output interface 44, a microphone that receives audio input, or the like.

The output interface 44 includes one or more interfaces for output to output information and notify the user. For example, the output interface 44 includes a display that outputs information as images, a speaker that outputs information as audio, or the like.

The controller 45 includes one or more processors. The controller 45 is communicably connected with each component of the third information processing terminal 40 and controls overall operations of the third information processing terminal 40.

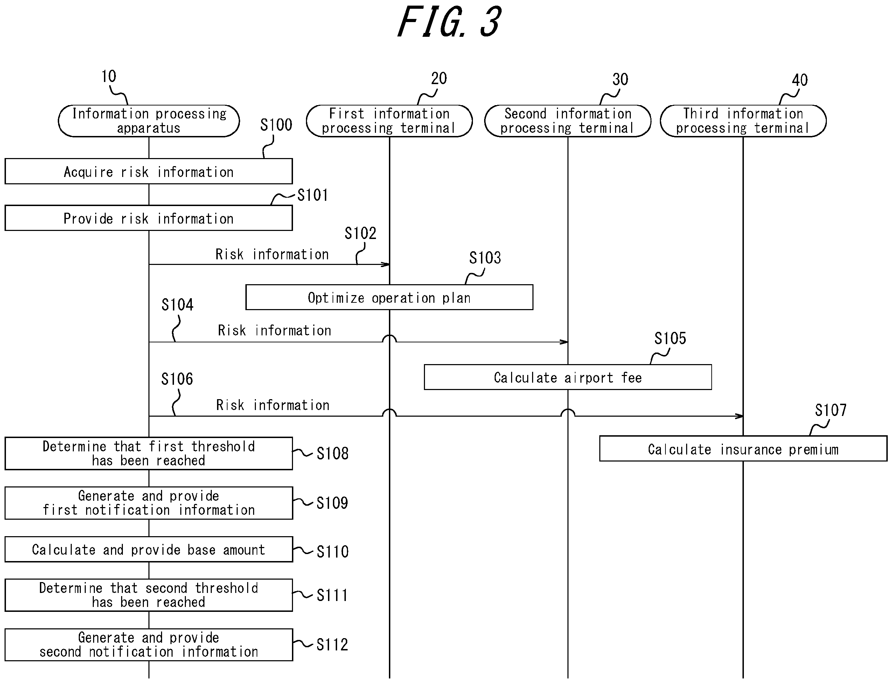

FIG. 3 is a sequence diagram illustrating an example of an information processing method executed by the information processing system 1 in FIG. 1. An example of a method of an information processing method executed by the information processing system 1 in FIG. 1 is mainly described with reference to FIG. 3. The sequence diagram illustrated in FIG. 3 illustrates the basic process flow of the information processing method executed by the information processing system 1.

In step S100, the controller 13 of the information processing apparatus 10 acquires risk information on a foreign object that could cause damage to the aircraft based on damage to each tire attached to the aircraft for each location at which the tire may have been damaged.

At this time, the controller 13 acquires the risk information by the following method. The controller 13 acquires damage information for each tire mounted on the aircraft based on a tire inspection during a retread inspection. In the present disclosure, the "damage information" includes, for example, the location of damage, the type or manner of damage, the number of instances of damage, and other inspection results, along with tire identification information and the like.

The controller 13 acquires location information regarding the location at which the tire may have been damaged. In the present disclosure, the "location information" includes, for example, history information on locations that are airports, operated by a predetermined airline, where an aircraft, having attached thereto a tire identified from the identification information for the tire, takes off or lands. The controller 13 may acquire such location information by acquiring the operation plan, described below, from any apparatus in any manner.

The controller 13 acquires damage information and location information for each tire and estimates the location at which the tire may have been damaged. Based on the location information, the controller 13 identifies information such as which airport was used by the aircraft to which the tire was attached and on which flight schedule, and combines this information with the damage information to estimate the location with a predetermined accuracy. The controller 13 calculates the percentage of FOD occurring for each estimated location, i.e., for each airport. Through the calculation process described above, the controller 13 acquires risk information for each airport.

In step S101, the controller 13 of the information processing apparatus 10 enables provision of the risk information acquired in step S100 as a common indicator for determining fee information related to operation of the aircraft. For example, the controller 13 makes the risk information acquired in step S100 accessible from the first information processing terminal 20, the second information processing terminal 30, and the third information processing terminal 40 via the network 50 while periodically updating the risk information on a digital platform. Users can view the risk information by accessing the information processing apparatus 10 using their own information processing terminals.

In step S102, the controller 25 of the first information processing terminal 20 accesses the risk information made available in step S101 via the communication interface 21 and the network 50.

In step S103, the controller 25 of the first information processing terminal 20 optimizes the operation plan of the aircraft based on the risk information accessed in step S102. In the present disclosure, the "operation plan" includes, for example, the airports to be used by the aircraft, the operation route, and the operation schedule.

The controller 25 may accept input operations, via the input interface 23 from the user of the airline who confirmed the risk information on the output interface 24 in step S102, and optimize the aircraft operation plan of the aircraft of the airline based on input information acquired from the input interface 23. The controller 25 may automatically optimize the operation plan of the aircraft based on the access to the risk information in step S102. More specifically, the controller 25 may modify the operation plan to minimize the use of airports with high risk information.

In step S104, the controller 35 of the second information processing terminal 30 accesses the risk information made available in step S101 via the communication interface 31 and the network 50.

In step S105, the controller 35 of the second information processing terminal 30 calculates the airport fee that the management company of the airport is to receive from the airline, based on the risk information accessed in step S104. The controller 35 may accept input operations, via the input interface 33 from the user of the management company who confirmed the risk information on the output interface 34 in step S104, and calculate the airport fee to be received by the management company based on the input information acquired from the input interface 33. The controller 35 may automatically calculate the airport fee based on the access to the risk information in step S104.

The controller 35 may calculate the airport fee to be lower as the risk information acquired in step S100 is higher. The controller 35 may calculate the airport fee to be higher as the risk information acquired in step S100 is lower.

In step S106, the controller 45 of the third information processing terminal 40 accesses the risk information made available in step S101 via the communication interface 41 and the network 50.

In step S107, the controller 45 of the third information processing terminal 40 calculates the insurance premium that the insurance company receives from the airline as the insured party, based on the risk information accessed in step S106. The controller 45 may accept input operations, via the input interface 43 from the user of the insurance company who confirmed the risk information on the output interface 44 in step S106, and calculate the insurance premium to be received by the insurance company based on the input information acquired from the input interface 43. The controller 45 may automatically calculate the insurance premium based on the access to the risk information in step S106.

The controller 45 may calculate the insurance premium to be higher as the risk information acquired in step S100 is higher. More specifically, the controller 45 may calculate the insurance premium to be higher as the aircraft more frequently uses an airport with high risk information. The controller 45 may calculate the insurance premium to be lower as the risk information acquired in step S100 is lower. More specifically, the controller 45 may calculate the insurance premium to be lower as the aircraft more frequently uses an airport with low risk information. In this case, the controller 45 may acquire a simplified flight plan, indicating which airports the aircraft of the airline will use, from any apparatus in any manner.

In step S108, the controller 13 of the information processing apparatus 10 determines that the risk information acquired in step S100 has reached a first threshold. For example, the controller 13 determines that the incidence of FOD has reached or exceeded the first threshold.

In step S109, the controller 13 of the information processing apparatus 10 generates first notification information upon determining that the risk information has reached the first threshold in step S108 and provides the first notification information to the user referring to the risk information. In the present disclosure, the "first notification information" includes, for example, the fact that the risk information has reached the first threshold, recommendations including a proposed action based on the risk information, and the like.

The controller 13 provides the first notification information to the user of the first information processing terminal 20 via the communication interface 11 and the network 50. More specifically, the controller 13 transmits the first notification information to the first information processing terminal 20 via the communication interface 11 and the network 50. In this case, the proposed action includes, for example, a new operation plan modified to minimize the use of airports with high risk information.

The controller 13 provides the first notification information to the user of the second information processing terminal 30 via the communication interface 11 and the network 50. More specifically, the controller 13 transmits the first notification information to the second information processing terminal 30 via the communication interface 11 and the network 50. In this case, the proposed action includes, for example, reducing the risk information by cleaning the airport runway or the like to remove foreign objects that may damage the aircraft. The proposed action includes any other suggestions for improvement to reduce the risk information.

The controller 13 provides the first notification information to the user of the third information processing terminal 40 via the communication interface 11 and the network 50. More specifically, the controller 13 transmits the first notification information to the third information processing terminal 40 via the communication interface 11 and the network 50. In this case, the proposed action includes, for example, increasing the insurance premium charged to the corresponding airline in a case in which an aircraft uses an airport with high risk information.

In step S110, the controller 13 of the information processing apparatus 10 calculates a base amount of the fee information based on the risk information acquired in step S100. The controller 13 enables provision of the calculated base amount of the fee information as a common indicator, for example, for determining the fee information related to operation of the aircraft. For example, the controller 13 makes the base amount calculated in step S110 accessible from the first information processing terminal 20, the second information processing terminal 30, and the third information processing terminal 40 via the network 50 while periodically updating the base amount on a digital platform. Users can view the base amount by accessing the information processing apparatus 10 using their own information processing terminals.

The controller 13 may calculate the base amount of the airport fee to be lower as the risk information acquired in step S100 is higher. More specifically, the controller 13 may calculate a lower base amount of the airport fee to be charged to the airline by the management company managing an airport with higher risk information. The controller 13 may calculate the base amount of the airport fee to be higher as the risk information acquired in step S100 is lower. More specifically, the controller 13 may calculate a higher base amount of the airport fee to be charged to the airline by the management company managing an airport with lower risk information.

The controller 13 may calculate the base amount of the insurance premium to be higher as the risk information acquired in step S100 is higher. More specifically, the controller 13 may calculate the base amount of the insurance premium to be charged by the insurance company to the airline to be higher as the aircraft more frequently uses an airport with high risk information. The controller 13 may calculate the base amount of the insurance premium to be lower as the risk information acquired in step S100 is lower. More specifically, the controller 13 may calculate the base amount of the insurance premium to be charged by the insurance company to the airline to be lower as the aircraft more frequently uses an airport with low risk information. In this case, the controller 45 may acquire a simplified flight plan, indicating which airports the aircraft of the airline will use, from any apparatus in any manner.

In step S111, the controller 13 of the information processing apparatus 10 determines that the base amount calculated in step S110 has reached a second threshold. For example, the controller 13 determines that the base amount of the airport fee has fallen to or below the second threshold. For example, the controller 13 determines that the base amount of the insurance premium has reached or exceeded the second threshold. Here, the controller 13 may set different amounts of money as the second threshold for the base amount of the airport fee and the base amount of the insurance premium, respectively.

In step S112, the controller 13 of the information processing apparatus 10 generates second notification information upon determining that the base amount has reached the second threshold in step S111 and provides the second notification information to the user referring to the base amount. In the present disclosure, the "second notification information" includes, for example, the fact that the base amount has reached the second threshold, recommendations including a proposed action based on the base amount, and the like.

The controller 13 provides the second notification information to the user of the first information processing terminal 20 via the communication interface 11 and the network 50. More specifically, the controller 13 transmits the second notification information to the first information processing terminal 20 via the communication interface 11 and the network 50. In this case, the proposed action includes, for example, a new operation plan modified to maximize the use of the airports whose base amount of the airport fee is equal to or less than the second threshold. The proposed action includes, for example, a new operation plan modified to reduce the base amount of the insurance premium to be below the second threshold by minimizing the use of airports with high risk information, which caused the base amount of the insurance premium to reach or exceed the second threshold.

The controller 13 provides the second notification information to the user of the second information processing terminal 30 via the communication interface 11 and the network 50. More specifically, the controller 13 transmits the second notification information to the second information processing terminal 30 via the communication interface 11 and the network 50. In this case, the proposed action includes, for example, increasing the base amount of the airport fee to be higher than the second threshold by cleaning the airport runway or the like to remove foreign objects that may damage the aircraft. The proposed action includes any other suggestions for improvement to increase the base amount of the airport fee to be higher than the second threshold.

The controller 13 provides the second notification information to the user of the third information processing terminal 40 via the communication interface 11 and the network 50. More specifically, the controller 13 transmits the second notification information to the third information processing terminal 40 via the communication interface 11 and the network 50. In this case, the proposed action includes, for example, increasing the insurance premium charged to the corresponding airline in a case in which an aircraft uses an airport that is the cause of the base amount of the insurance premium reaching or exceeding the second threshold.

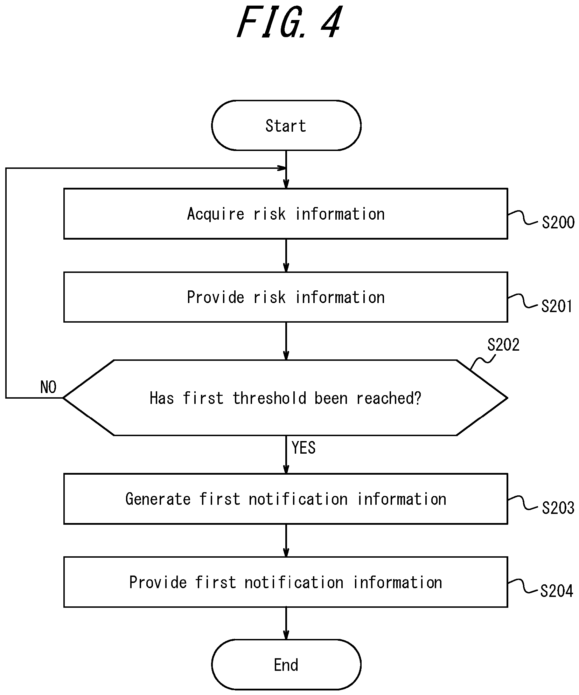

FIG. 4 is a flowchart for explaining a first example of an information processing method executed by the information processing apparatus 10 in FIG. 1. The first example of the information processing method executed by the information processing apparatus 10 in FIG. 1 is described with reference to FIG. 4. The flowchart in FIG. 4 illustrates the basic process flow of the information processing method executed by the information processing apparatus 10 and the process flow regarding the first notification information.

In step S200, the controller 13 of the information processing apparatus 10 acquires risk information on a foreign object that could cause damage to the aircraft based on damage to each tire attached to the aircraft for each location at which the tire may have been damaged.

In step S201, the controller 13 enables provision of the risk information acquired in step S200 as a common indicator for determining fee information related to operation of the aircraft.

In step S202, the controller 13 determines whether the risk information acquired in step S200 has reached the first threshold. When determining that the risk information has reached the first threshold, the controller 13 executes the process of step S203. When determining that the risk information has not reached the first threshold, the controller 13 once again executes the process of step S200. For example, upon determining that the risk information is lower than the first threshold, the controller 13 once again executes the process of step S200.

Upon determining in step S202 that the risk information has reached the first threshold, the controller 13 generates the first notification information in step S203.

In step S204, the controller 13 provides the first notification information generated in step S203 to the user referring to the risk information.

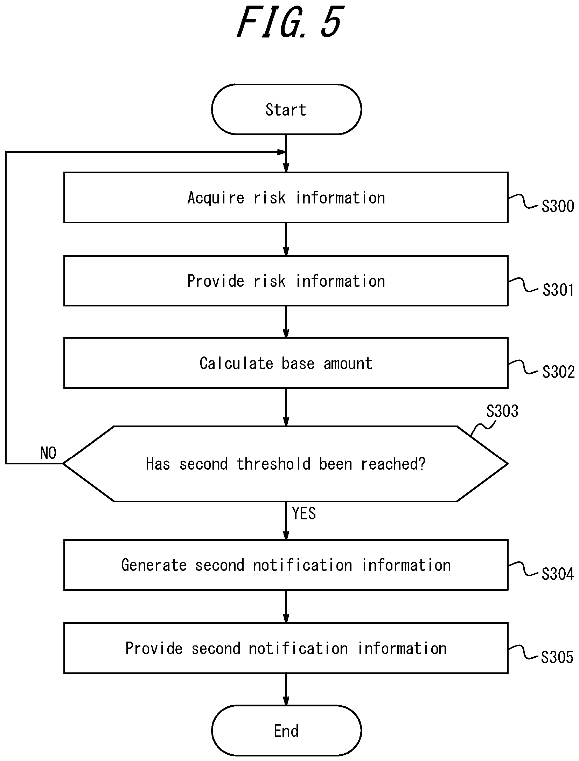

FIG. 5 is a flowchart for explaining a second example of an information processing method executed by the information processing apparatus 10 in FIG. 1. The second example of the information processing method executed by the information processing apparatus 10 in FIG. 1 is described with reference to FIG. 5. The flowchart in FIG. 5 illustrates the basic process flow of the information processing method executed by the information processing apparatus 10 and the process flow regarding the second notification information.

In step S300, the controller 13 of the information processing apparatus 10 acquires risk information on a foreign object that could cause damage to the aircraft based on damage to each tire attached to the aircraft for each location at which the tire may have been damaged.

In step S301, the controller 13 enables provision of the risk information acquired in step S300 as a common indicator for determining fee information related to operation of the aircraft.

In step S302, the controller 13 calculates the base amount of the fee information based on the risk information acquired in step S300.

In step S303, the controller 13 determines whether the base amount calculated in step S302 has reached the second threshold. When determining that the base amount has reached the second threshold, the controller 13 executes the process of step S304. When determining that the base amount has not reached the second threshold, the controller 13 once again executes the process of step S300. For example, when determining that the base amount of the airport fee has not reached the second threshold but rather remains higher than the second threshold, the controller 13 once again executes the process of step S300. For example, when determining that the base amount of the insurance premium has not reached the second threshold but rather remains lower than the second threshold, the controller 13 once again executes the process of step S300.

Upon determining in step S303 that the base amount has reached the second threshold, the controller 13 generates second notification information in step S304.

In step S305, the controller 13 provides the second notification information generated in step S304 to the user referring to the base amount.

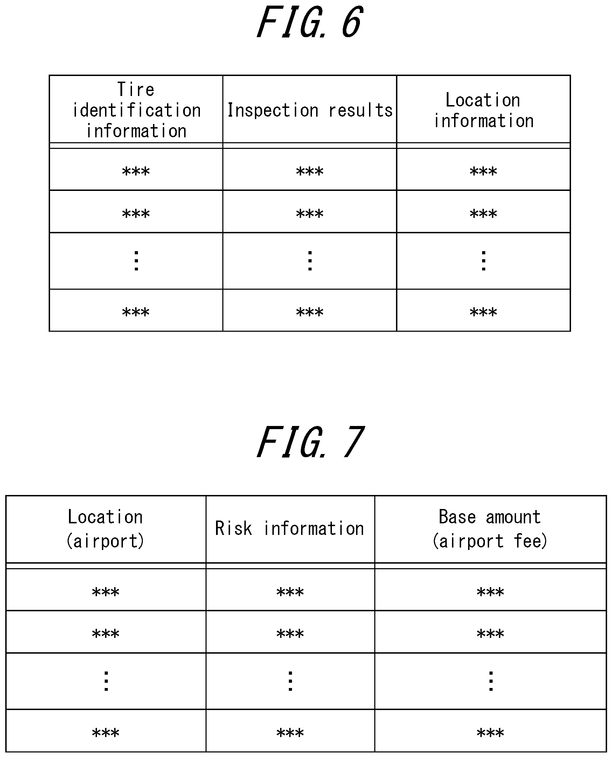

FIG. 6 is a diagram illustrating a first example of information stored in the memory 12 of the information processing apparatus 10 in FIG. 1. FIG. 6 relates to information associated with each tire inspected during tire inspection at the time of a retread inspection. With reference to FIG. 6, the information that is stored in the database of the memory 12 in the information processing apparatus 10 and is necessary for the controller 13 to acquire risk information will be described.

In such a database, information on the inspection results acquired from the inspection is associated with the identification information of the inspected tire. The inspection results include, for example, the location of damage, the type or manner of damage, and the number of instances of damage, as described above. Similarly, location information regarding the location at which the tire may have been damaged is associated with the identification information of the inspected tire.

A plurality of such tires exists. The tire identification information, such as identification information A, identification information B, ..., is for identifying the tire with which the inspection results, location information, and the like are associated.

The controller 13 of the information processing apparatus 10 acquires tire identification information and inspection results based on information entered, using any information processing terminal, by a user who inspects tires during the retread inspection, for example. The controller 13 acquires the location information by acquiring the operation plan from any of the first information processing terminal 20, the second information processing terminal 30, the third information processing terminal 40, or any other external apparatus, via the network 50 and the communication interface 11, for example.

The controller 13 creates a database of the various information, acquired as described above, as information necessary to acquire the risk information and stores the database in the memory 12 for centralized management.

FIG. 7 is a diagram illustrating a second example of information stored in the memory 12 of the information processing apparatus 10 in FIG. 1. FIG. 7 relates to information acquired by the controller 13 based on the various information in FIG. 6. With reference to FIG. 7, the information that is stored in the database of the memory 12 in the information processing apparatus 10 and is acquired by the controller 13 from the various information in FIG. 6 will be described.

In such a database, risk information and the base amount of the airport fee for a predetermined airport are associated with the airport. The airport is estimated by the controller 13 based on the various information in FIG. 6 as a possible location at which a tire may have been damaged. The risk information indicates, for example, the percentage of FOD occurring for a predetermined airport relative to the total count of inspection data illustrated in FIG. 6. The base amount of the airport fee is calculated by the controller 13 based on such risk information for a predetermined airport.

A plurality of such airports exists. The information on airports, such as airport X, airport Y, ..., is for identifying the airport with which the risk information, base amount of the airport fee, and the like are associated. The controller 13 creates a database of the various information, acquired as described above, and stores the database in the memory 12 for centralized management.

According to the above-described embodiment, risk information based on foreign objects that could cause damage to an aircraft can be used for optimizing business operations related to the operation of an aircraft. The information processing apparatus 10 acquires such risk information for each location at which a tire may have been damaged and can provide the risk information as a common indicator for determining fee information related to operation of the aircraft. This enables airlines, airport management companies, and insurance companies associated with aircraft operations to easily confirm the risk information published on a digital platform by the information processing apparatus 10 using their own information processing terminals. Airlines, airport management companies, and insurance companies can optimize their own business operations related to the operation of aircraft based on such risk information.

For example, in accordance with the risk information provided via the second information processing terminal 30, an airport management company can optimize the airport fee it receives from airlines. For example, in accordance with the risk information provided via the third information processing terminal 40, an insurance company can optimize the insurance premium that the insurance company receives from an airline as the insured party. For example, in accordance with the risk information provided via the first information processing terminal 20, an airline can optimize flight plans to reduce the costs associated with operating aircraft while balancing airport fees and insurance premiums.

Upon determining that the acquired risk information has reached the first threshold, the information processing apparatus 10 generates the first notification information and provides the first notification information to the user referring to the risk information, thereby increasing the user's awareness of improvement from a financial perspective. For example, an airport management company that receives the first notification information is made aware of the need to take action, such as cleaning airport runways and other areas to remove foreign objects that could damage aircraft, in order to reduce the risk information and increase the airport fee. For example, an insurance company that receives the first notification information is made aware of the need to increase the insurance premium charged to the corresponding airline when an aircraft uses an airport with high risk information, in order to maintain the balance with the risk of paying out an insurance claim. For example, an airline that receives the first notification is made aware of the need to modify the flight plan in order to reduce insurance premiums by minimizing the use of airports with high risk information.

By calculating a base amount of the fee information based on risk information, the information processing apparatus 10 can provide more specific common indicators that can be used to optimize various business operations related to the operation of aircraft. This enables airlines, airport management companies, and insurance companies associated with aircraft operations to easily confirm the base amount of the fee information published on a digital platform by the information processing apparatus 10 using their own information processing terminals. Airlines, airport management companies, and insurance companies can optimize their own business operations related to the operation of aircraft based on such a base amount.

For example, an airport management company can more directly optimize the airport fee it receives from airlines in accordance with the base amount of the airport fee provided via the second information processing terminal 30. For example, an insurance company can more directly optimize the insurance premium that the insurance company receives from an airline as the insured party in accordance with the base fee of the insurance premium provided via the third information processing terminal 40. For example, an airline can more directly optimize flight plans to reduce the costs associated with operating aircraft while balancing airport fees and insurance premiums in accordance with the base amount of the fee information provided via the first information processing terminal 20.

Upon determining that the calculated base amount has reached the second threshold, the information processing apparatus 10 generates the second notification information and provides the second notification information to the user referring to the base amount, thereby further increasing the user's awareness of improvement from a financial perspective. For example, an airport management company that receives the second notification information is made aware of the need to take action, such as cleaning airport runways and other areas to remove foreign objects that could damage aircraft, in order to increase the base amount of the airport fee. For example, an insurance company that receives the second notification information is made aware of the need to increase the insurance premium charged to the corresponding airline when an aircraft uses an airport that is the cause for an increased base amount of the insurance premium, in order to maintain the balance with the risk of paying out an insurance claim.

For example, an airline that receives the second notification is made aware of the need to modify the flight plan in order to reduce insurance premiums by minimizing the use of airports with a high base amount of the airport fee. For example, an airline that receives the second notification is made aware of the need to modify the flight plan in order to reduce the costs associated with operating aircraft by maximizing the use of airports with a low base amount of the airport fee.

Although the present disclosure is based on embodiments and drawings, it is to be noted that various changes and modifications may be made by those skilled in the art based on the present disclosure. Therefore, such changes and modifications are to be understood as included within the scope of the present disclosure. For example, the functions and the like included in the various configurations and steps may be reordered in any logically consistent way. Furthermore, components or steps may be combined into one or divided.

For example, at least a portion of the processing operations executed by the information processing apparatus 10 in the above embodiment may be executed by at least one of the first information processing terminal 20, the second information processing terminal 30, and the third information processing terminal 40. At least a portion of the processing operations executed by any of the first information processing terminal 20, the second information processing terminal 30, and the third information processing terminal 40 may be executed by the information processing apparatus 10.

For example, a general-purpose electronic device, such as a smartphone or a computer, can also be configured to function as the information processing apparatus 10 according to the above embodiment. Specifically, a program describing the processing content for realizing the functions of the information processing apparatus 10 or the like according to an embodiment is stored in a memory of the electronic device, and the program is read and executed by the processor of the electronic device. Accordingly, the present disclosure can also be embodied as a program executable by a processor.

Alternatively, an embodiment can also be realized as a non-transitory computer readable medium storing a program executable by one or more processors to cause the information processing apparatus 10 or the like according to an embodiment to execute each function. Such embodiments are also to be understood as falling within the scope of the present disclosure.

In the above embodiment, the information processing apparatus 10 has been described as acquiring risk information based on damage to each tire attached to the aircraft for each location at which the tire may have been damaged, but this configuration is not limiting. The information processing apparatus 10 may, for example, cooperate with any system capable of detecting foreign objects on an airport runway and acquire risk information based on the result of detection by the system.

In the above embodiment, the information processing apparatus 10 has been described as generating the first notification information upon determining that the acquired risk information has reached the first threshold and as providing the first notification information to the user referring to the risk information, but this configuration is not limiting. The information processing apparatus 10 need not execute such processing related to the first notification.

In the above embodiment, the information processing apparatus 10 has been described as calculating the base amount of the fee information based on the risk information, but this configuration is not limiting. The information processing apparatus 10 need not execute such processing related to the base amount of the fee information.

In the above embodiment, the information processing apparatus 10 has been described as generating the second notification information upon determining that the calculated base amount has reached the second threshold and as providing the second notification information to the user referring to the risk information, but this configuration is not limiting. The information processing apparatus 10 need not execute such processing related to the second notification.

In the above embodiment, the information processing apparatus 10 has been described as calculating the insurance premium based on the absolute value of the risk information, but this configuration is not limiting. In addition to or instead of such an absolute value of the risk information, the information processing apparatus 10 may calculate the appropriate amount of an insurance premium to be charged to the corresponding airline based, for example, on the frequency with which an aircraft uses the airport.

In the above embodiment, the information processing apparatus 10 has been described as calculating the base amount of the insurance premium based on the absolute value of the risk information, but this configuration is not limiting. In addition to or instead of such an absolute value of the risk information, the information processing apparatus 10 may calculate the appropriate amount of the base amount of the insurance premium to be charged to the corresponding airline based, for example, on the frequency with which an aircraft uses the airport.

In the above embodiment, the information processing apparatus 10 has been described as providing the acquired risk information as a common indicator by making the risk information accessible via the network 50 on a digital platform, but this configuration is not limiting. The information processing apparatus 10 may provide the acquired risk information as a common indicator by transmitting the risk information to at least one of the first information processing terminal 20, the second information processing terminal 30, and the third information processing terminal 40 via the communication interface 11 and the network 50.

In the above embodiment, the information processing apparatus 10 has been described as providing the calculated base amount of the fee information as a common indicator by making the base amount accessible via the network 50 on a digital platform, but this configuration is not limiting. The information processing apparatus 10 may provide the calculated base amount of the fee information as a common indicator by transmitting the base amount to at least one of the first information processing terminal 20, the second information processing terminal 30, and the third information processing terminal 40 via the communication interface 11 and the network 50.

In the above embodiment, an example of the risk information including the incidence of FOD and the like has been described, but this configuration is not limiting. In addition to the incidence of FOD, the risk information may, for example, include information such as the type, load, and flight route of the target aircraft.

### REFERENCE SIGNS LIST

- 1: Information processing system
- 10: Information processing apparatus
- 11: Communication interface
- 12: Memory
- 13: Controller
- 20: First information processing terminal
- 21: Communication interface
- 22: Memory
- 23: Input interface
- 24: Output interface
- 25: Controller
- 30: Second information processing terminal
- 31: Communication interface
- 32: Memory
- 33: Input interface
- 34: Output interface
- 35: Controller
- 40: Third information processing terminal
- 41: Communication interface
- 42: Memory
- 43: Input interface
- 44: Output interface
- 45: Controller
- 50: Network

## Claims

1. An information processing apparatus comprising a controller, wherein
the controller is configured to
acquire risk information based on a foreign object that could cause damage to an aircraft, and
enable provision of the acquired risk information as a common indicator for determining fee information related to operation of the aircraft.

2. The information processing apparatus according to claim 1, wherein the controller is configured to acquire the risk information based on damage to each tire attached to the aircraft for each location at which the tire may have been damaged.

3. The information processing apparatus according to claim 1 or 2, wherein the controller is configured to generate first notification information upon determining that the acquired risk information has reached a first threshold and provide the first notification information to a user referring to the risk information.

4. The information processing apparatus according to claim 1 or 2, wherein the controller is configured to calculate a base amount of the fee information based on the risk information.

5. The information processing apparatus according to claim 4, wherein
the fee information includes an airport fee paid by an airline that operates the aircraft, and
the controller is configured to calculate the base amount of the airport fee to be lower as the risk information is higher.

6. The information processing apparatus according to claim 4, wherein
the fee information includes an insurance premium paid to an insurance company by an airline, as an insured party, that operates the aircraft, and
the controller is configured to calculate the base amount of the insurance premium to be higher as the risk information is higher.

7. The information processing apparatus according to claim 4, wherein the controller is configured to generate second notification information upon determining that the calculated base amount has reached a second threshold and provide the second notification information to a user referring to the risk information.

8. An information processing system comprising:
the information processing apparatus according to claim 1 or 2;
a first information processing terminal to be used by an airline that operates the aircraft;
a second information processing terminal to be used by a management company of an airport used in operation of the aircraft; and
a third information processing terminal to be used by an insurance company with which the airline contracts as an insured party.

9. The information processing system according to claim 8, wherein the first information processing terminal is configured to optimize an operation plan of the aircraft based on the risk information.

10. The information processing system according to claim 8, wherein the second information processing terminal is configured to calculate, based on the risk information, an airport fee to be received by the management company from the airline.

11. The information processing system according to claim 8, wherein the third information processing terminal is configured to calculate, based on the risk information, an insurance premium to be received by the insurance company from the airline that is the insured party.

12. A non-transitory computer readable medium storing a program executable by one or more processors to cause an information processing apparatus to execute functions comprising:
acquiring risk information based on a foreign object that could cause damage to an aircraft; and
enabling provision of the acquired risk information as a common indicator for determining fee information related to operation of the aircraft.

13. An information processing method to be executed on an information processing apparatus, the information processing method comprising:
acquiring risk information based on a foreign object that could cause damage to an aircraft; and
enabling provision of the acquired risk information as a common indicator for determining fee information related to operation of the aircraft.
